# EUROPÄISCHE PATENTSCHRIFT

(11) **EP 0 944 497 B1**
(45) Veröffentlichungstag und Bekanntmachung des Hinweises auf die Patenterteilung: **07.06.2000**
(21) Anmeldenummer: 97953638.0
(22) Anmeldetag: 12.12.1997
(51) Int. Cl.: B60R 16/02

(54) **VORRICHTUNG ZUR HERSTELLUNG EINER ELEKTRISCHEN STECKVERBINDUNG ZWISCHEN ELEKTRISCHEN ODER ELEKTRONISCHEN BAUTEILEN ODER BAUGRUPPEN**
DEVICE FOR PRODUCING AN ELECTRICAL PLUG-IN CONNECTION BETWEEN ELECTRICAL OR ELECTRONIC COMPONENTS OR SUB-ASSEMBLIES
DISPOSITIF POUR REALISER UNE CONNEXION ELECTRIQUE ENFICHABLE ENTRE DES COMPOSANTS OU MODULES ELECTRIQUES OU ELECTRONIQUES

(30) Priorität: 12.12.1996 DE 19653733
(43) Veröffentlichungstag der Anmeldung: 29.09.1999
(73) Patentinhaber: Brose Fahrzeugteile GmbH & Co. KG, 96450 Coburg (DE)
(72) Erfinder: ÜBELEIN, Jörg, D-96271 Grub am Forst (DE); Weber, Horst, D-95339 Wirsberg (DE); Seeberger, Jürgen, D-96148 Baunach (DE)
(74) Vertreter: Ninnemann, Detlef, Dipl.-Ing.
(86) Internationale Anmeldenummer: DE9702942
(87) Internationale Veröffentlichungsnummer: WO9825799

(56) Entgegenhaltungen:
- EP-A- 0 534 659
- DE-A- 3 530 413
- DE-A- 3 804 086
- DE-C- 3 309 149
- US-A- 4 800 648

## Beschreibung

Die Erfindung betrifft eine Vorrichtung zur Herstellung einer elektrischen Steckverbindung zwischen elektrischen oder elektronischen Bauteilen oder Baugruppen gemäß dem Oberbegriff des Anspruchs 1.

Aus der DE 32 39 370 C2 ist eine Fahrzeugtür mit einem Türaußenblech bekannt, das einen Tragrahmen mit einer Aussparung für eine Fensterscheibe aufweist. Ein Aggregateträger nimmt die Türarmaturen wie Fensterscheibe, Fensterhebemechanismus und Türschloß auf und wird getrennt vom Türaußenblech gefertigt, fertig montiert und am Türaußenblech anmontiert. Eine Türinnenverkleidung bildet den Abschluß der Fahrzeugtür zum Fahrzeuginnenraum und wird mit dem Aggregateträger oder dem Türaußenblech verbunden.

Aus der DE 35 29 660 C2 ist eine Fahrzeugtür mit einem Türaußenblech, einem Türrahmen und einem Türinnenblech bekannt, das mehrere Ausschnitte enthält, die von einer Trägerplatte abgedeckt werden. Die Trägerplatte ist mit einem Kabelbaum versehen, der mehrere Abzweigungen aufweist, die mit Verbindungsmitteln wie Klebebändern auf der Trägerplatte befestigt sind und an ihren Enden Verbindungsstecker aufweisen, die mit den verschiedenen elektrischen Ausrüstungen der Tür wie Fensterhebermotor, Türschloß, Öffnungsschalter für den Kofferraum und dgl. verbindbar _{sind.}

Aus der US-A-4,794,735 ist eine modulare Fahrzeugtür bekannt, die aus einer Türaußenhaut, einem Türmodul mit einem Türrahmen und einem Seitenaufprallschutz sowie einer Innenverkleidung zusammengesetzt ist. Auf dem Seitenaufprallschutz sind eine Antriebseinheit für einen Fensterheber sowie ein Türschloßmechanismus montiert. Mit dem Türmodul verbunden und durch die Anlenkseite der Fahrzeutür geführt ist ein Kabelbaum, der mit Steckverbindungen versehen ist, die mit den elektrischen Einrichtung verbunden sind.
Aus der DE-A-38 04 086 A1 ist eine Kabelbaumanordnung im einem Leitungsschutzgehäuse mit Öffnungen für den Durchgang von elektrischen Steckern beschrieben, die an der Innenverkleidung von Fahrzeugtüren mittels schrauben montiert wird.

Aus der DE-A-38 04 086 A1 ist eine Kabelbaumanordnung im einem Leitungsschutzgehäuse mit Öffnungen für den Durchgang von elektrischen Steckern beschrieben, die an der Innenverkleidung von Fahrzeugtüren mittels schrauben montiert wird. Die Stecker lagern dabei über elastische Lagerarme verschieblich in den Öffnungen des Gehäuses, um die Ungenauigkeiten bei der Zuordnung von in der Türinnenwand befestigten Bauteilen zu den Steckern auszugleichen.

Die DE 35 30 413 A1 beschreibt einen Bausatz für die Verlegung elektrischer Leitungen, wobei die elektrische Kontaktierung von Steckteilen über ein formsteifes Tragteil realisiert wird, in das durchgehende Steckerteile in Gestalt von leitenden Stiften eingeformt sind. Auf dieses Tragteil wird ein Form- oder Abdeckteil aufgebracht, um die elektrischen Steckerteile gegenüber dem Innenraum zu verkleiden

Die US 4 800 648 beschreibt eine Vorrichtung, bei der die mit Steckern versehenen elektrischen Leitungen von in einem Fahrzeugtürrahmen montierten elektrischen Bauteilen aus Öffnungen des Türinnenblechs bis auf die höhe der Innenverkleidung herausgeführt werden. Zwischen der Innenverkleidung und dem Türinnenblech ist ein Kabelbaum mit Steckern angeordnet, die ebenfalls bis auf die Höhe der Innenverkleidung herausgeführt werden und neben den Steckern der Bauteile liegen. Durch Brücken werden die jeweiligen Bauteile durch den Kabelbaum mit den entsprechenden Schaltern oder Versorgungsleitungen verbunden.

Aus der EP 0 534 659 A2 ist eine Anordnung mehrerer Kabelbäume in einer Fahrzeugtür bekannt, bei der die innerhalb eines Türrahmens angeordneten Bauteile vor der Montage der Innenverkleidung komplett mit einem Kabelbaum verkabelt werden. Die Schalter an der Innenverkleidung werden ebenfalls mit einem Kabelbaum verbunden, wobei die Kabelbäume jeweils in einem Vielfachstecker münden, die bei der Montage von Türrahmen und Innenverkleidung miteinander in Kontakt gebracht werden.

Durch das Anbringen von biegsamen, strangförmigen Dichtungsprofilen zwischen Aggregateträger bzw. Trägerplatte und Türinnenblech oder durch Abdecken der verschiedenartigen Öffnungen auf der Innenseite einer Fahrzeugtür mittels einer großflächigen, wasserdichten Folie wird der Innenraum der Fahrzeugtür in einen zwischen Türaußenblech und Trägerplatte, Aggregateträger oder dergleichen sowie ggf. der wasserdichten Folie liegenden Naßraum und ein zwischen dem Aggregateträger bzw. der Trägerplatte und der Türinnenverkleidung liegenden Trockenraum der Fahrzeugtür unterteilt. Durch die geeigneten Abdichtungsmaßnahmen im Bereich der Trägerplatte, dem Aggregateträger oder dergleichen wird das Eindringen von Feuchtigkeit in den Trockenraum und damit an den an die Türinnenverkleidung angrenzenden Raum verhindert.

Verschiedene Fahrzeugtür-Bauteile sind auf der Naßraumseite des Aggregateträgers bzw. der Trägerplatte montiert und die elektrische Verbindung zu diesen Bauteilen wird mittels eines Kabelbaums hergestellt, der durch eine Öffnung vom Trocken- in den Naßraum geführt wird und dort mittels einer Naßraum-Steckverbindung mit dem betreffenden Bauteil eine elektrische Verbindung herstellt. Beispielsweise werden elektrische Schlösser mit und ohne integrierte Elektronik sowie mit und ohne Steuerlogik auf der Naßraumseite des Aggregateträgers oder der Trägerplatte bzw. am Türinnenblech befestigt und mittels einer Naßraum-Steckverbindung am Schloß mit einem durch eine Öffnung im Aggregateträger oder der Trägerplatte bzw. der Abdeckfolie vom Trocken- in den Naßraum geführten Kabelbaum verbunden.

Diese Art der elektrischen Verbindung eines elektrischen Schlosses mit einem Kabelbaum macht eine Kabelführung und die Anordnung einer Steckverbindung im Naßraum erforderlich, so daß zusätzliche Dichtungsmaßnahmen am Schloß, an der Steckverbindung und an der Durchführung des Kabelbaums vom Trocken- in den Naßraum erforderlich sind.

Aufgabe der vorliegenden Erfindung ist es, eine Verbindungsvorrichtung zwischen elektrischen und/oder elektronischen Bauteilen oder Baugruppen zu entwickeln, die eine Durchführung durch eine Wandung aufweist und im Vergleich zu bekannten technischen Lösungen kostengünstiger ist, montage- und servicefreundlicher ausgeführt ist und gleichzeitig eine hohe Lebensdauer aufweist.

Diese Aufgabe wird erfindungsgemäß durch die Merkmale des Anspruchs 1 gelöst.

Durch die erfindungsgemäße Ausbildung des Bauteilhalters wenigstens eines der zu verbindenden Bauteile oder Baugruppen als ein die Öffnung der jeweiligen Wandung durchgreifender elektrischer Steckverbinder wird eine optimale Lage zur Herstellung der Verbindung des elektrischen oder elektronischen Bauteils einer Fahrzeugtür mit einer elektrischen oder elektronischen Fahrzeugeinrichtung geschaffen. Bei dieser Anordnung kann ein Kabelbaum ausschließlich im Trockenraum der Fahrzeugtür geführt und die Steckverbindung mit dem elektrischen oder elektronischen Bauteil im Trockenraum hergestellt werden.

Damit ist auch keine Kabelbaumabdichtung an der Schnittstelle zwischen Naß- und Trockenraum erforderlich und es kann auf zusätzliche Einzeladerabdichtungen der Steckverbindung verzichtet werden. Durch die Zusammenfassung verschiedenener elektrischer Verbindungen im Kabelbaum des elektrischen oder elektronischen Bauteils kann die Anzahl der Schnittstellen im Naßraum vermindert und damit die Qualität der Verbindungen erhöht werden. Zudem ermöglicht die besondere Anordnung der Schnittstelle die Verbindung eines im Naßraum angeordneten elektrischen oder elektronischen Bauteils mit feuchtigkeitsempfindlichen Bauelementen, die in einer Bauteilelektronik im Trockenraum der Fahrzeugtür angeordnet sind.

Es kann jedoch ebenfalls vorgesehen sein, daß die Elektronik für das elektrische oder elektronische Bauteil in dieses integriert ist. Beispielsweise ist die Steuerelektronik eines elektrischen oder elektronischen Schlosses in Form eines Chips in das elektrische oder elektronische Schloß eingegossen.

Die erfindungsgemäße Lösung ermöglicht es, die verschiedenen elektrischen Verbindungen für Steuer-, Regel- und Sensorfunktionen an einer Steckverbindung zusammenzufassen und die räumliche Lage der Steckverbindung an einer günstigen Stelle im Türinnenraum vorzusehen, insbesondere an dem Übergang zwischen Naßraum und Trockenraum der Fahrzeugtür. Damit werden mehrere einzelne Kabelverbindungen, die bei einer Steckverbindung im Naßraum der Fahrzeugtür einzeln abzudichten sind, entbehrlich und es kann neben einer Verbindung mit einem mehrere elektrische Leiter zusammenfassenden Kabelbaum auch eine Steckverbindung mit einem Elektronikmodul vorgesehen werden, so daß beispielsweise das betreffende Türbauteil im Naßraum der Fahrzeugtür angeordnet ist, während die Steuer- und Regelelektronik auf der Trockenraumseite der Fahrzeugtür vorgesehen ist.

Dementsprechend besteht eine vorteilhafte Ausgestaltung der erfindungsgemäßen Lösung darin, den Bauteilhalter an der Schnittstelle zwischen Naßraum und Trockenraum der Fahrzeugtür anzuordnen. Die Wandung, durch deren Öffnung der als elektrischer Steckverbinder ausgebildete Bauteilhalter durchgreift, stellt dann die Trennstelle zwischen Naßraum und Trockenraum der Fahrzeugtür dar.

Vorzugsweise weisen der Bauteilhalter und das elektrische oder elektronische Bauteil ein gemeinsames Gehäuse auf, d.h. der Bauteilhalter wird zum integralen Bestandteil des elektrischen oder elektronischen Bauteils.

Der Durchgriff durch die Wandung ist in einer vorteilhaften Ausführung der Erfindung gegen Feuchtigkeit abgedichtet, so daß eine zuverlässige Trennung von Naß- und Trockenraum erfolgt.

In einer bevorzugten Ausgestaltung der Erfindung ragt der Bauteilhalter oder Steckverbinder durch die Wandung in Richtung des Trockenraums und schließt die Öffnung feuchtigkeitsdicht ab. Auf diese Weise kann ein Kabelbaum montagefreundlich mit dem Bauteilhalter bzw. Steckverbinder im Trockenraum verbunden werden.

Der Bauteilhalter kann mittels einer geeigneten Befestigungseinrichtung an einem Befestigungsteil der Fahrzeugtür, insbesondere dem Türinnenblech, einer den Ausschnitt des Türinnenbeches abdeckenden Einrichtung oder einem Türbasisteil oder Aggregateträger unmittelbar befestigt werden. Eine vorteilhafte Befestigungsart besteht in der Anordnung von Clipselementen am Bauteilhalter, so daß dieser zusammen mit dem elektrischen oder elektronischen Bauteil nach dem Durchstecken des Bauteilhalters durch eine dem Querschnitt des Bauteilhalters angepaßte Öffnung in dem Befestigungsteil der Fahrzeugtür mit diesem fest verbindbar ist.

Zur Abdichtung der Verbindung des Bauteilhalters mit dem Befestigungselement der Fahrzeugtür kann eine zusätzliche Dichtung im Bereich der Durchstecköffnung vorgesehen werden, so daß der Bauteilhalter mit dem elektrischen oder elektronischen Bauteil dichtend am Befestigungsteil der Fahrzeugtür anliegt.

Wird die Durchstecköffnung und/oder der in der Durchstecköffnung angeordnete Gehäuseteil des Bauteilhalters konisch ausgebildet, so kann auf eine zusätzliche Dichtung zwischen Bauteilhalter bzw. elektrischem oder elektronischem Bauteil und Befestigungsteil verzichtet werden.

Durch Einspritzen der im Bauteilhalter angeordneten Leitungen in den Bauteilhalter wird eine elektrisch und mechanisch sichere Anordnung der einzelnen Leitungen des im Bauteilhalter integrierten Kabelbaums gewährleistet.

Bevorzugt angewendet wird die erfindungsgemäße Vorrichtung für die Verbindung eines elektrischen oder elektronischen Türschlosses, einer elektrischen Antriebseinheit für einen Fensterheber oder einer Spiegelverstelleinrichtung mit einem Kabelbaum oder einer elektrischen oder elektronischen Einrichtung.

In einer vorteilhaften Ausgestaltung der Erfindung ist der Leitungsführungsbereich des Bauteilhalters oder elektrischen Steckverbinders derart flexibel ausgebildet, daß Fertigungs- und Maßtoleranzen ausgeglichen werden können. Hierzu ist der Leitungsführungsbereich bevorzugt in einem Spritzteil als Dehnungs- und/oder Stauchungsbogen ausgebildet.

Anhand eines in der Zeichnung dargestellten Ausführungsbeispieles, das sich insbesondere auf ein elektrisches bzw. elektronisches Schloß als elektrisches oder elektronisches Bauteil bezieht, soll der der Erfindung zugrunde liegende Gedanke näher erläutert werden. Es zeigen:
- Fig. 1 -: eine Explosionsdarstellung einer Fahrzeugtür;
- Fig. 2 -: einen schematischen Schnitt durch ein elektrisches oder elektronisches Schloß mit integralem Schloßhalter;
- Fig. 3 -: einen Schnitt durch den Kontaktbereich eines Schloßhalters mit einer Dichtung zwischen dem Schloßhalter und einem Befestigungsteil der Fahrzeugtür,
- Fig. 4 -: einen Schnitt durch den Kontaktbereich eines Schloßhalters mit konischem Gehäuse, das in einer konischen Durchstecköffnung angeordnet und mittels Clipsverbindung mit einem Befestigungsteil der Fahrzeugtür verbunden ist und
- Fig. 5 -: einen schematischen Schnitt durch ein elektrisches oder elektronisches Schloß mit integralem Schloßhalter, wobei der Leitungsführungsbereich flexibel ausgebildet ist.

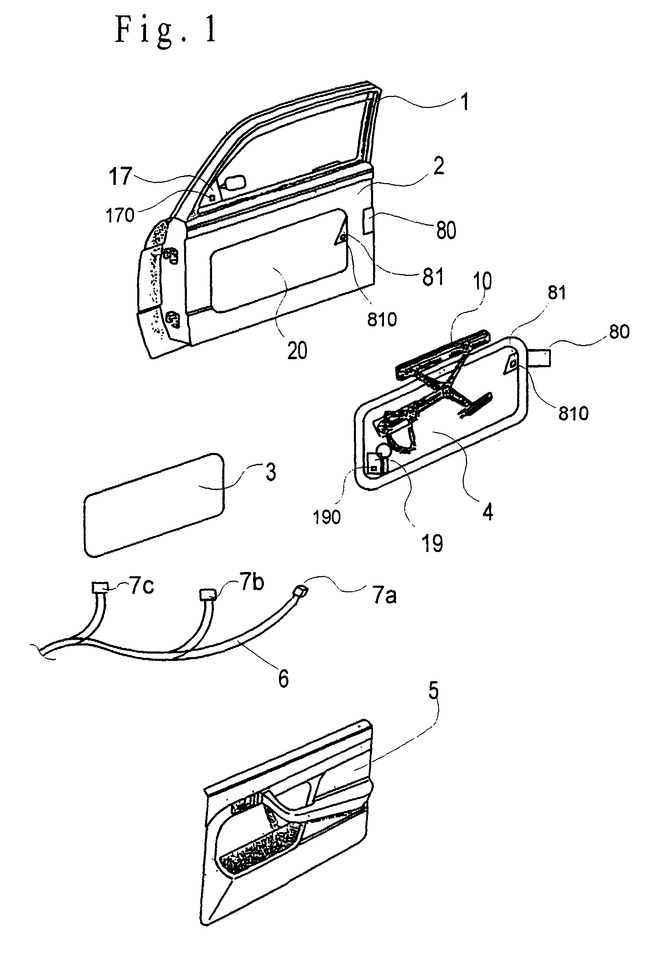

Die in Fig. 1 gezeigte Explosionsdarstellung einer Fahrzeugtür zeigt ein Türaußenblech 1 mit einer in einem Tragrahmen geführten Fensterscheibe sowie Scharnieren zum Anbringen der Fahrzeugtür an einem Fahrzeugrahmen. Das Türaußenblech 1 geht in ein Türinnenblech 2 über, das einen Ausschnitt 20 aufweist, der mittels einer Platte oder Folie 3 bzw. einer Trägerplatte oder einem Aggregateträger 4 abgedeckt wird.

Am Türinnenblech 2 bzw. an der Verbindungsseite zwischen Türinnenblech 2 und Türaußenblech 1 ist ein Türschloß 80 angeordnet, mit dem die Fahrzeugtür gegenüber dem Fahrzeugrahmen verriegelbar ist. Das Türschloß 80 weist ein Befestigungsteil 81 auf, das am Türinnenblech 2 befestigt und durch das das Türschloß 80 in der Fahrzeugtür mechanisch festgelegt ist. Aus dem Befestigungsteil 81 ragt ein elektrischer Steckverbinder 810, an den eine passende Steckverbindung anbringbar ist, wie nachfolgend noch im einzelnen ausgeführt werden wird.

Alternativ zur Anordnung des Befestigungsteils 81 am Türinnenblech 2 ist das Befestigungsteil 81 am Aggregateträger bzw. Türbasisteil 4 ausgebildet, das zusätzlich weitere Bauelemente wie beispielsweise einen Fensterheber 10 und dergleichen trägt. Das Türschloß 80 ragt dabei über den Aggregateträger bzw. das Türbasisteil 4 heraus. Durch das Befestigungsteil 81 ragt wiederum ein Steckverbinder 810.

Bei dem Fensterheber 10 handelt es sich um einen elektrisch betriebenen Fensterheber, der durch eine elektrische Antriebseinheit 19 angetrieben wird. Aus dem die Antriebseinheit 19 tragenden Aggregateträger bzw. Türbasisteil 4 ragt ein Steckverbinder 190, an den eine Steckverbindung etwa eines Kabelbaums anschließbar ist.

Am Fensterdreieck ist eine schematisch dargestellte elektrische Spiegelverstelleinrichtung 17 zur Einstellung des Türaußenspiegels angeordnet. An einen aus dem zugehörigen Befestigungsteil herausragenden Steckverbinder 170 ist eine Steckverbindung anschließbar.

Die Fahrzeugtür wird zum Türinnenraum durch eine Türinnenverkleidung 5 abgeschlossen, die eine Armlehne, Fensterkurbel, Türschloßverriegelung und ggf. Bedienungselemente für weitere Bauteilfunktionen der Fahrzeugtür aufweist.

Der Raum zwischen dem Türaußenblech 1 und dem Türinnenblech 2 bzw. der Abdeckfolie oder -platte 3 bzw. dem Türbasisteil oder Aggregateträger 4 wird als Naßraum des Türhohlraumes definiert, während der Bereich zwischen der Abdeckplatte oder -folie 3 bzw. zwischen dem Türbasisteil oder Aggregateträger 4 und der Türinnenverkleidung 5 als Trockenraum definiert wird.

Die elektrische Verbindung zwischen den verschiedenen im Türhohlraum angeordneten Türbauteilen und einer zentralen Stromversorgung sowie Steuereinrichtung wird über einzelne Kabelverbindungen hergestellt, die beispielsweise in Nuten des Aggregateträgers 4 verlegt sind und mittels elektrischer Steckkontakte mit den einzelnen Türbauteilen verbunden werden. Alternativ können auch Kabelbäume 6 mit entsprechend zusammengefaßten Steckverbindungen 7a, 7b, 7c zu den verschiedenen Türbauteilen geführt werden. Beispielsweise wird der in Fig. 1 dargestellte Kabelbaum 6 mit Steckverbindungen 7a, 7b, 7c mit der Steckverbindung 7a zu dem am Türinnenblech 2 oder dem Türbasisteil oder Aggregateträger 4 befestigten elektrischen oder elektronischen Schloß 80 geführt, das wahlweise mit oder ohne integrierter Elektronik sowie mit oder ohne Logik ausgeführt sein kann.

Die Steckverbindungen 7b, 7c werden entsprechend zu den weiteren elektrischen oder elektronischen Bauteilen innerhalb der Fahrzeugtür, nämlich zu der elektrischen Antriebseinheit 19 für den Fensterheber sowie zu der Spiegelverstellvorrichtung 17 geführt.

Sämtliche Steckverbindungen 7a, 7b, 7c sind mit den aus den jeweiligen Befestigungsteilen herausragenden Steckverbindern 810, 190, 170 verbindbar.

Durch eine spezielle Ausführungsform des elektrischen oder elektronischen Bauteils 80, 19, 17 sowie durch Verlagerung eines Teils des Kabelbaums in das elektrische oder elektronische Bauteil 80, 19, 17 wird eine Konfiguration geschaffen, die es ermöglicht, die Kabelführung und Steckverbindung ausschließlich im Trockenbereich der Fahrzeugtür vorzusehen, während das elektrische oder elektronische Bauteil 80, 19, 17 selbst im Naßraum der Fahrzeugtür angeordnet ist.

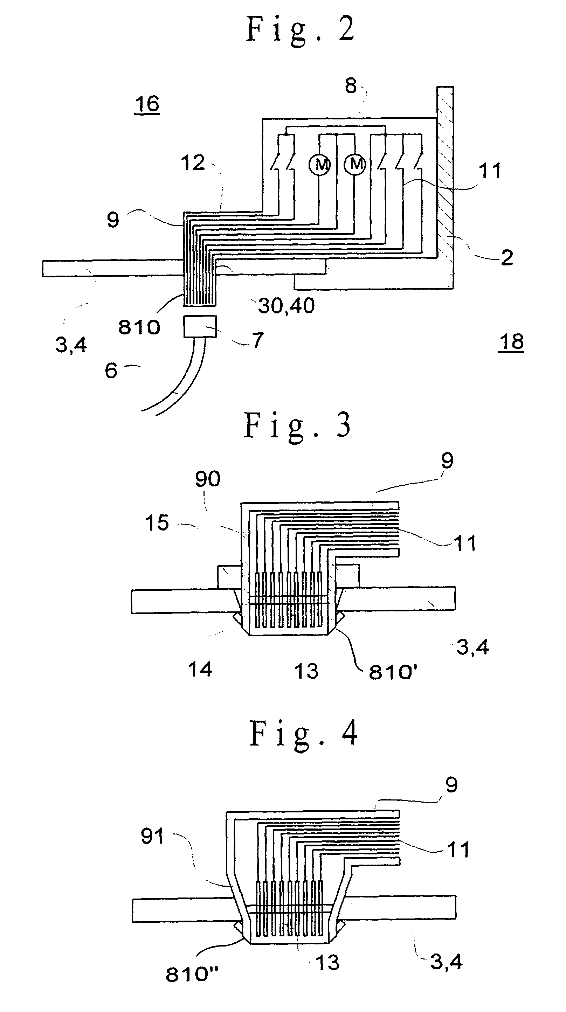

Die nachfolgenden Figuren 2 bis 5 betreffen die spezielle Ausführungsform des elektrischen oder elektronischen Bauteils als Türschloß. Jedoch sind die elektrische Antriebseinheit 19 sowie die Spiegelverstellvorrichtung 17 in entsprechender Weise ausgeführt und mit Steckverbindungen 7b, 7c verbunden.

Fig. 2 zeigt einen Querschnitt durch ein elektrisches oder elektronisches Schloß 8 mit mehreren darin angeordneten Bauelementen 11 wie beispielsweise Schaltelementen oder Elektromotoren und einen als integralen Bestandteil des elektrischen oder elektronischen Schlosses 8 ausgebildeten Schloßhalter 9, der durch eine Öffnung 30, 40 der mit einem Türinnenblech 2 verbundenen Abdeckplatte oder -folie 3 bzw. Aggregateträger oder Türbasisteil 4 gesteckt ist, so daß ein Teil des Schloßhalters 9 durch das betreffende Befestigungsteil 2, 3, 4 der Fahrzeugtür ragt.

Integraler Bestandteil des Schloßhalters 9 sind die vorzugsweise vergossenen bzw. eingespritzten und zu einem Leitungsführungsbereich 12 zusammengefaßten Leitungen zu den einzelnen Bauelementen 11 des elektrischen oder elektronischen Schlosses 8. Der Leitungsführungsbereich 12 kann durch Stanzteile, durch aufgeklebte oder aufgedruckte Leiter oder auch durch flexible Leiter verwirklicht werden. Der durch das Befestigungselement 3, 4 der Fahrzeugtür ragende Teil 810 des Schloßhalters 9 ist mit einem Stecker 7 eines Kabelbaumes 6 verbindbar bzw. dient zur Steckaufnahme eines elektrischen oder elektronischen Bauteils.

Bei der in Fig. 2 dargestellten Anordnung des elektronischen Schlosses 8 und Schloßhalters 9 im Naßraum 16 der Fahrzeugtür sowie der Anordnung der Steckverbindung zwischen dem Stecker 7 und dem Stecker-Gehäuseteil 810 des Schloßhalters 9 befindet sich die Kontaktierungsstelle zwischen einem Kabelbaum 6 oder einer nicht näher dargestellten elektrischen oder elektronischen Baueinheit im Übergangsbereich zwischen Trockenraum 18 und Naßraum 16 der Fahrzeugtür und ist gegen Feuchtigkeit geschützt vom Gehäuse des Schloßhalters 9 umgeben. Die Steckverbindung selbst und der Kabelbaum 6 bzw. das elektrische oder elektronische Bauteil befinden sich aber ausschließlich im Trockenraum 18 der Fahrzeugtür, so daß besondere Feuchtigkeits-Schutzmaßnahmen nicht erforderlich sind.

In den Fig. 3 und 4 sind verschiedene Ausführungsformen des Schloßhalters 9 und der Durchstecköffnung 30, 40 im Befestigungsteil 2, 3, 4 der Fahrzeugtür dargestellt.

Fig. 3 zeigt einen Querschnitt durch einen Schloßhalter 9 mit im Übergangsbereich zylindrischer Gehäuseform 90, in der die als Kabelbaum 11 zusammengefaßten Zuleitungen vorzugsweise vergossen sind und zu einer Steckverbindung 13 führen, die im Bereich der zylindrischen Gehäuseöffnung des Schloßträgers 9 angeordnet ist. An der Außenseite des Gehäuseteils 90 des hervorragenden Teils 810' des Schloßträgers 9 sind Clipselemente 14 angeordnet, die nach dem Durchstecken des zylindrischen Gehäuseteils 90 des Schloßträgers 9 durch die Durchstecköffnung 30, 40 im Befestigungsteil 2, 3, 4 der Fahrzeugtür an der Trockenraumseite des Befestigungsteils 2, 3, 4 anliegen und die Lage des Schloßhalters 9 am Befestigungsteil 2, 3, 4 sichern.

Zur Abdichtung des Durchgangsbereichs ist eine Dichtung 15 vorgesehen, die zwischen dem Gehäuse 90 des Schloßhalters 9 und der Naßraumseite des Befestigungsteils 2, 3, 4 in der Fahrzeugtür angeordnet ist und das Eindringen von Feuchtigkeit in den Trockenraum der Fahrzeugtür verhindert.

Fig. 4 zeigt eine andere Gehäuseform des Schloßhalters 9, bei deren Verwendung auf eine zusätzliche Dichtung verzichtet werden kann. In dieser Ausführungsform weist der Schloßhalter 9 im Übergangsbereich eine konische Gehäuseform 91 auf, die formschlüssig an einer konischen Durchgangsbohrung 30, 40 des Befestigungsteils 2, 3, 4 der Fahrzeugtür anliegt.

Auch in dieser Ausführungsform wird der Schloßhalter 9 am Befestigungsteil 2, 3, 4 mittels Clipselemente 14 befestigt. Die Steckverbindung 13 befindet sich unmittelbar im Übergangsbereich zwischen dem Naßraum und Trockenraum der Fahrzeugtür und dient zur Aufnahme eines Steckers 7, der am Ende eines Kabelbaums 6 angeordnet oder mit einem elektrischen oder elektronischen Bauteil verbunden ist, so daß das elektrische oder elektronische Schloß 8 mit darin vergossen angeordneten Funktionselementen im Naßraum angeordnet ist, während der Verbindungsbereich vom Naßraum in den Trockenraum hineinragt und die Kontaktierung des Steckers 7 auf der Trockenraumseite der Fahrzeugtür am durch das Befestigungsteil 2, 3, 4 ragenden Teil 810'' des Schloßhalter 9 erfolgt.

Damit kann eine gesonderte Kabelbaumdichtung (Tülle) an der Schnittstelle zwischen Naß- und Trockenraum entfallen. Alternativ zur Verbindung mit einem Kabelbaum kann die Schloßelektronik in den Trockenraum, beispielsweise im Rahmen einer Multiplex-Anbindung, ausgelagert werden.

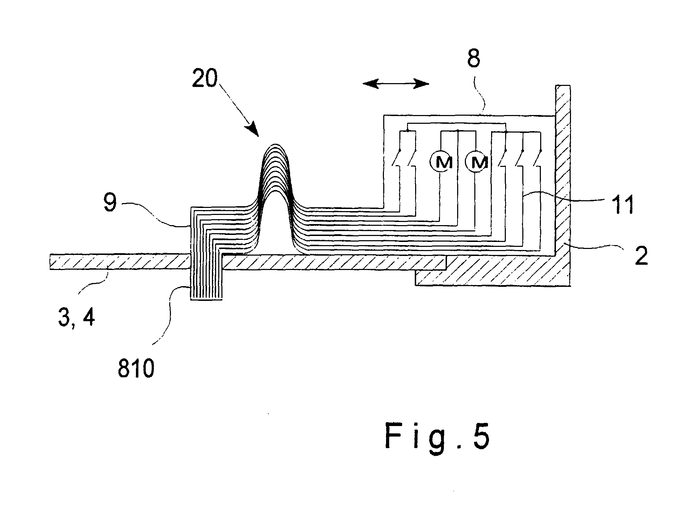

Fig. 5 zeigt ein elektrisches oder elektronisches Schloß 8 mit integralem Schloßhalter 9 gemäß Figur 2, wobei der Leitungsführungsbereich jedoch flexibel ausgebildet ist. Hierzu ist der Leitungsführungsbereich in einem Spritzteil als flexibler Dehnungs- und/oder Stauchungsbogen 20 ausgebildet. Auftretende Fertigungs- und Montagetoleranzen sind durch entsprechende Dehnung bzw. Stauchung des Bogens 20 ausgleichbar.

Die mit der Erfindung durch Verlagerung der Schnittstelle und Aufnahme eines Teils des Kabelbaums in den Befestigungsbereich des elektrischen oder elektronischen Bauteils erzielbaren Vorteile sind auch für solche Türinnenraumformen geeignet, bei denen Türbleche verwendet werden, die den Naßraum nicht vollständig vom Trockenraum trennen.

## Patentansprüche

1. Vorrichtung zur Herstellung einer elektrischen Steckverbindung zwischen elektrischen oder elektronischen Bauteilen oder Baugruppen (8, 80, 19, 17) durch eine Öffnung in der Wandung eines Befestigungsteils (2, 3, 4) innerhalb einer Fahrzeugtür, wobei das Befestigungsteil (2, 3, 4) die Trennstelle zwischen zwischen dem Naßraum (16) und dem Trockenraum (18) der Fahrzeugtür bildet und aus einem Türinnenblech (2), einer Trägerplatte (3), einem Türbasisteil oder einem Aggregateträger (4) besteht, mit einem die Bauteile oder Baugruppen (8, 80, 19, 17) in der Fahrzeugtür mechanisch festlegenden Bauteilhalter (9) und mit einem elektrischen Steckverbinder (810, 190, 170), der die Öffnung in der Wandung des Befestigungsteils (2, 3, 4) in Richtung des Trockenraumes (18) durchragt, wobei der elektrische Steckverbinder (810, 190, 170) oder ein daran angrenzendes Teil des Bauteilhalters (9) an dem Befestigungsteil (2, 3, 4) montierbar ist,
**dadurch gekennzeichnet**,
a) daß der Bauteilhalter (9) ein im Naßraum (16) angeordnetes Gehäuse (90, 91) aufweist, in dem die elektrischen oder elektronischen Bauteile oder Baugruppen (8, 90, 19, 17) sowie deren elektrischen Zuleitungen (12) zum Steckverbinder (810, 190, 170) angeordnet sind,
b) daß ein Teil des Bauteilhalter (9) als Steckverbinder (810, 190, 170) ausgebildet ist und
c) daß der Steckverbinder (810, 190, 170) die durchragte Öffnung feuchtigkeitsdicht abschließt.

2. Vorrichtung nach Anspruch 1, **dadurch gekennzeichnet**, daß der Bauteilhalter (9) mit Clipselementen (14), die an einer Stirnseite des Bauteilhalters (9) angeordnet sind und nach dem Durchstecken des Bauteilhalters (9) durch eine dem Querschnitt des Bauteilhalters (9) angepaßte Öffnung des Befestigungsteils (2, 3, 4) der Fahrzeugtür, an dem Befestigungsteil (2, 3, 4) befestigt ist.

3. Vorrichtung nach Anspruch 1 oder 2, **dadurch gekennzeichnet**, daß zwischen dem Bauteilhalter (9) und dem Befestigungsteil (2, 3, 4) der Fahrzeugtür eine Dichtung (15) angeordnet ist, die die Durchstecköffnung des Befestigungsteils (2, 3, 4) abdichtet.

4. Vorrichtung nach mindestens einem der vorangehenden Ansprüche **dadurch gekennzeichnet**, daß die im Bauteilhalter (9) angeordneten Zuleitungen (12) zu den Bauelementen (11) des elektrischen oder elektronischen Bauteils (8) als Kabelbaum ausgebildet sind.

5. Vorrichtung nach mindestens einem der vorangehenden Ansprüche, **dadurch gekennzeichnet**, daß die Bauelemente (11) des elektrischen oder elektronischen Bauteils (8) und/oder die im Bauteilhalter (9) angeordneten Zuleitungen (12) eingespritzt sind.

6. Vorrichtung nach mindestens einem der vorangehenden Ansprüche, **dadurch gekennzeichnet**, daß die elektrische Einrichtung aus einem die Bauelemente (11) des elektrischen oder elektronischen Bauteils oder der Baugruppe (8) mit einem elektrischen oder elektronischen Bauteil der Fahrzeugtür oder des Fahrzeugs verbindenden Kabelbaum (6) oder einem weiteren elektrischen oder elektronischen Bauteil besteht.

7. Vorrichtung nach mindestens einem der vorangehenden Ansprüche, **dadurch gekennzeichnet**, daß die Durchstecköffnung und/oder der in der Durchstecköffnung angeordnete Gehäuseteil (91) des Bauteilhalters (9) konisch ausgebildet ist/sind.

8. Vorrichtung nach mindestens einem der vorangehenden Ansprüche, **dadurch gekennzeichnet**, daß das elektrische oder elektronische Bauteil aus einem elektrischen oder elektronischen Schloß (80) und/oder einer elektrischen Antriebseinheit (19) für einen Fensterheber und/oder einer Spiegelverstelleinrichtung (17) besteht.

9. Vorrichtung nach mindestens einem der vorangehenden Ansprüche, **dadurch gekennzeichnet**, daß der Leitungsführungsbereich (12) des Bauteilhalters oder elektrischen Steckverbinders (9) derart flexibel ausgebildet ist, daß Fertigungs- und Maßtoleranzen ausgeglichen werden können.

10. Vorrichtung nach Anspruch 9, **dadurch gekennzeichnet**, daß der Leitungsführungsbereich (12) in einem Spritzteil als Dehnungs- und/oder Stauchungsbogen (20) ausgebildet ist.

## Claims

1. Device for producing an electrical plug connection between electric or electronic component parts or structural groups (8, 80, 19, 17) through an opening in the wall of a fastening part (2, 3, 4) inside a vehicle door, wherein the fastening part (2, 3, 4) forms the separating point between the wet cell (16) and the dry cell (18) of the vehicle door and consists of a door inner panel (2), a support plate (3), a door base part or an assembly support (4), with a component part holder (9) which mechanically fixes the component parts or structural groups (8, 80, 19, 17) in the vehicle door, and with an electrical plug connector (810, 190, 170) which projects through the opening in the wall of the fastening part (2, 3, 4) in the direction of the dry cell (18) wherein the electrical plug connector (810, 190, 170) or a part of the component part holder (9) adjoining same can be mounted on the fastening part (2, 3, 4),
characterised in that
a) the component part holder (9) has a housing (90, 91) mounted in the wet cell (16) and containing the electric or electronic component parts or structural groups (8, 80, 19, 17) as well as their electric leads (12) to the plug connector (810, 190, 170);
b) a part of the component part holder (9) is formed as a plug connector (810, 190, 170) and
c) the plug connector (810, 190, 170) closes the opening sealed against dampness.

2. Device according to claim 1 characterised in that the component part holder (9) is fixed on the fastening part (2, 3, 4) by clip elements (14) which are mounted on an end side of the component part holder (9), and after pushing the component part holder (9) through an opening in the fastening part (2, 3, 4) of the vehicle door adapted to the cross-sectional area of the component part holder (9).

3. Device according to claim 1 or 2 characterised in that a seal (15) is provided between the component part holder (9) and the fastening part ( 2,3 4) of the vehicle door and seals the through opening of the fastening part (2, 3, 4).

4. Device according to at least one of the preceding claims characterised in that the leads (12) in the component part holder (9) leading to the structural elements (11) of the electric or electronic component part (8) are formed as a cable tree.

5. Device according to at least one of the preceding claims characterised in that the structural elements (11) of the electric or electronic component part (8) and/or the leads (12) provided in the component part holder (9) are injection moulded.

6. Device according to at least one of the preceding claims, characterised in that the electric device consists of a cable tree (6) connecting the structural elements (11) of the electric or electronic component part or structural group (8) to an electric or electronic component part of the vehicle door or of the vehicle, or consists of a further electric or electronic component part.

7. Device according to at least one of the preceding claims characterised in that the through opening and/or the housing part (91) of the component part holder (9) mounted in the through opening is or are formed conical.

8. Device according to at least one of the preceding claims characterised in that the electric or electronic component part consists of an electric or electronic lock (80) and/or of an electric drive unit (19) for a window lifter and/or a mirror adjustment device (17).

9. Device according to at least one of the preceding claims characterised in that the lead guide area (12) of the component part holder or electric plug connector (9) is formed flexible so that production and manufacturing tolerances can be compensated.

10. Device according to claim 9 characterised in that the lead guide area (12) is formed as an expansion and/or compression curve (20) in an injection moulded part.

## Revendications

1. Dispositif pour établir une connexion électrique à enfichage entre des composants ou modules électriques ou électroniques (8,80,19,17) à travers une ouverte aménagée dans la paroi d'une partie de fixation (2,3,4) à l'intérieur d'une portière de véhicule, dans lequel la partie de fixation (2,3,4) forme l'élément de séparation entre l'espace humide (16) et l'espace sec (18) de la portière du véhicule et est constituée par une tôle intérieure de portière (2), une plaque de support (3), une partie de base de portière ou un support (4) d'agrégats, et comportant un support (9) de composants, qui fixe mécaniquement les composants ou les modules (8,80,19,17) dans la portière du véhicule, et un connecteur électrique (810,190,170), qui traverse l'ouverture aménagée dans la paroi de la partie de fixation (2,3,4) en direction de l'espace sec (18), le connecteur électrique (810,190,170) ou une partie, qui jouxte ce connecteur, du support (9) de composants pouvant être monté sur la partie de fixation (2,3,4),
caractérisé en ce
a) que le support (9) de composants comporte un boîtier (90,91), qui est disposé dans l'espace humide (16) et dans lequel sont disposés les composants ou modules électriques ou électroniques (8,80,19,17) ainsi que leur lignes d'alimentation électrique (12) aboutissant au connecteur (810,190,170),
b) qu'une partie du support (9) de composants est agencée sous la forme d'un connecteur (810,190,170), et
c) que le connecteur (810,190,170) ferme d'une manière étanche à l'humidité l'ouverture de traversée.

2. Dispositif selon la revendication 1, caractérisé en ce que le support (9) de composants comporte des éléments en forme de pinces (14), qui sont disposés sur une face frontale du support (9) de composants, et qui, après l'enfichage du support (9) de composants dans une ouverture, qui est adaptée à la section transversale du support (9) de composants, deux parties de fixation (2,3,4) de la portière du véhicule, et est fixé à la partie de fixation (2,3,4).

3. Dispositif selon la revendication 1 ou 2, caractérisé en ce qu'entre le support (9) de composants et la partie de fixation (2,3,4) de la portière de véhicule est disposée une garniture d'étanchéité (15), qui ferme de façon étanche l'ouverture d'enfichage de la partie de fixation (2,3,4).

4. Dispositif selon au moins l'une des revendications précédentes, caractérisé en ce que les lignes d'alimentation (12), qui sont disposées dans le support (9) de composants, et aboutissent aux éléments constitutifs (11) du composant électrique ou électronique (8), sont agencées sous la forme d'un faisceau de câbles.

5. Dispositif selon au moins l'une des revendications précédentes, caractérisé en ce que les éléments constitutifs (11) du composant électrique ou électronique (8) et/ou les lignes d'alimentation (12) disposées dans le support (9) de composants sont moulés par injection.

6. Dispositif selon au moins l'une des revendications précédentes, caractérisé en ce que le dispositif électrique est constitué par un faisceau de câbles (6), qui relie les éléments de construction (11) du composant électrique ou électronique ou du module (8) à un composant électrique ou électronique de la portière du véhicule ou du véhicule, ou par un autre composant électrique ou électronique.

7. Dispositif selon au moins l'une des revendications précédentes, caractérisé en ce que l'ouverture d'enfichage et/ou la partie de boîte (91), disposée dans l'ouverture d'enfichage, du boîtier du support (9) de composants est/sont réalisée(s) avec une forme conique.

8. Dispositif selon au moins l'une des revendications précédentes, caractérisé en ce que le composant électrique ou électronique est constitué par une serrure électrique ou électronique (80) et/ou par une unité d'entraînement électrique (19) pour un lève-glace et/ou par un dispositif (17) de réglage d'un miroir.

9. Dispositif selon au moins l'une des revendications précédentes, caractérisé en ce que la zone (12) de guidage des lignes du support de composants ou du connecteur électrique (9) est agencée de manière à être flexible de telle sorte que des tolérances de fabrication et des tolérances sur les cotes peuvent être compensées.

10. Dispositif selon la revendication 9, caractérisé en ce que la zone (12) de guidage des lignes est formée dans une pièce moulée par injection sous la forme d'un coude de dilatation et/ou de compression (20).
